Europäisches Patentamt

European Patent Office

Office européen des brevets

(19)

(11) Veröffentlichungsnummer : **0 181 899**
**B1**

(12) **EUROPÄISCHE PATENTSCHRIFT**

(45) Veröffentlichungstag der Patentschrift :
**13.04.88**

(21) Anmeldenummer : **85902525.6**

(22) Anmeldetag : **15.05.85**

(86) Internationale Anmeldenummer :
**PCT/EP 85/00231**

(87) Internationale Veröffentlichungsnummer :
**WO/8505293 (05.12.85 Gazette 85/26)**

(51) Int. Cl.⁴ : **B 65 G 47/19**

(54) VORRICHTUNG ZUR KONTINUIERLICHEN WEITERFÖRDERUNG VON GEGENSTÄNDEN.

(30) Priorität : **19.05.84 DE 3418796**

(43) Veröffentlichungstag der Anmeldung :
**28.05.86 Patentblatt 86/22**

(45) Bekanntmachung des Hinweises auf die Patenterteilung : **13.04.88 Patentblatt 88/15**

(84) Benannte Vertragsstaaten :
**AT CH DE FR GB IT LI NL SE**

(56) Entgegenhaltungen :
**FR-A- 2 358 342**
**US-A- 4 279 338**

(73) Patentinhaber : **Maschinenfabrik Bezner GmbH & Co. KG**
**Holbeinstrasse 30**
**D-7980 Ravensburg (DE)**

(72) Erfinder : **STEHLE, Wolfgang**
**Tödiweg 34**
**D-7981 Schlier (DE)**
Erfinder : **REBER, Franz**
**Wassertreter 8**
**D-7980 Ravensburg (DE)**
Erfinder : **SEIFRIED, Max**
**Adelsreuter Strasse 15**
**D-7981 Ravensburg-Bavendorf (DE)**

(74) Vertreter : **Patentanwälte Dipl.-Ing. E. Eisele Dr.-Ing. H. Otten**
**Seestrasse 42**
**D-7980 Ravensburg (DE)**

## Beschreibung

Die Erfindung betrifft eine Vorrichtung und Fördereinrichtung nach dem Oberbegriff des Anspruchs 1.

Bei Sortieranlagen zur Aussortierung von Materialien aus Hausmüll, Gewerbemüll, Sperrmüll, Trockenmüll und/oder Problem- und Gefahrenstoffen (s. WO-A-85/03890, die zum Stand der Technik gemäß Artikel 54(3) EPÜ gehört) wird das zu sortierende Gut mehreren Bearbeitungsstationen zugeführt. Beispielsweise wird völlig unsortierter Trockenmüll mit einem hohen Anteil an Papier, Glas usw. einer Bunkerband-Fördereinrichtung zugeführt, die das Materialgemisch zunächst beispielsweise einem Stangenrostsieb (s. WO-A-85/03889, die zum Stand der Technik gemäß Artikel 54(3) EPÜ gehört) zuführt, wo es weiterbehandelt wird. Das bloße Aufgeben von Materialien auf das schräg ansteigende Bunkerband zur Zuführung einer Bearbeitungsstation, z. B. Stangenrostsieb, führt dazu, daß eine stark unterschiedliche Belastung der nachfolgenden Einrichtung dadurch eintritt, daß in gleichen Zeitintervallen unterschiedlich große Mengen von Materialien auf die nachfolgende Einrichtung auftreffen und zu einer ungleichmäßigen Belastung und schlechteren Verteilung führen. Das Ergebnis der nachgeschalteten Vorrichtung hängt deshalb von einer gewissen gleichmäßigen Beaufschlagung der Vorrichtung ab.

Aus der FR-A-2 358 342, die dem Oberbegriff des Anspruchs 1 entspricht, ist eine Fördereinrichtung bekannt geworden, die einen intermittierenden Abfallstrom in einen konstanten Abfallstrom umwandelt. Hierfür wird oberhalb eines Transportbandes für den Abfallstrom eine rotierende Planiervorrichtung in einem bestimmten Abstand vom Förderer derart angeordnet, daß unterhalb der Planiervorrichtung Abfall nur in einer gewünschten Höhe auf dem Förderband verbleiben kann. Das restliche Gut wird durch die gegenläufig rotierende Planiervorrichtung zurückgehalten.

Diese bekannte Vorrichtung ist in ihrem Aufbau sehr kompliziert und aufwendig gestaltet. Weiterhin ist der Abstand der rotierenden Planiervorrichtung zum Transportband in seiner eingestellten Lage fest justiert, was bei sperrigem, in der Größe sehr unterschiedlich anfallenden Müll von Nachteil wäre. Das zurückgehaltene Gut kann sich in der rotierenden Planiervorrichtung außerdem verhaken, so daß es zu Störungen kommen kann.

Der Erfindung liegt die Aufgabe zugrunde, eine Vorrichtung zu schaffen, die es mit einfachen Mitteln erlaubt, eine gleichmäßige Beaufschlagung einer der Fördereinrichtung nachgeschalteten Bearbeitungsvorrichtung zu ermöglichen.

Diese Aufgabe wird ausgehend von einer Vorrichtung und Fördereinrichtung der eingangs erwähnten Art erfindungsgemäß durch die kennzeichnenden Merkmale des Anspruchs 1 gelöst.

Die erfindungsgemäße Vorrichtung mit den kennzeichnenden Merkmalen des Hauptanspruchs hat den Vorteil, daß das in seiner Verteilung ungleichmäßig ankommende Gemisch von Materialien bzw. Trockenmüll usw. gleichmäßig auf die nachfolgende Vorrichtung aufgebracht werden kann. Der Wirkungsgrad beispielsweise eines nachgeschalteten Rüttelsiebs ist damit erheblich höher als bei intermittierender Beaufschlagung mit dem zu behandelnden Material. Dabei zeichnet sich die erfindungsgemäße Vorrichtung durch eine äußerst einfache und damit störungsunanfällige Konstruktion aus, die sich auch weitgehend allen Belastungsanforderungen ohne weiteres anpassen kann.

Durch die erfindungsgemäße Einrichtung ist es weiterhin möglich, eine mehr oder weniger ungleichmäßige Beaufschlagung der Bunkerband-Transportvorrichtung vorzunehmen, was beispielsweise durch Planierraupen geschieht, da diese Belastungsschwankungen durch die Einrichtung ausgeglichen werden.

In den Unteransprüchen sind weitere Maßnahmen zur Lösung der erfindungsgemäßen Aufgabe und insbesondere zur vorteilhaften Weiterbildung und Verbesserung der erfindungsgemäßen Vorrichtung vorgesehen. Gemäß der Ausbildung nach Unteranspruch 2 wird der vordere Bereich des Ausgleichspaddels mittels einer flexiblen Aufhängung, insbesondere eines Drahtseils geführt. Hierdurch kann sich das Ausgleichspaddel in seiner Höhenlage dem ankommenden Materialiengemisch anpassen. Darüber hinaus liegt das Ausgleichspaddel bei leerem Transportband nicht auf diesem auf. Die eingestellte Höhe der Aufhängung bestimmt die auf jeden Fall zulässige Menge an weiter zu transportierenden Materialien.

Gemäß der Ausbildung nach Unteranspruch 3 ist es vorteilhaft, daß das Ausgleichspaddel in Form eines quaderförmigen Körpers ausgebildet ist, welcher an seiner Unterseite zackenförmige Eingriffszähne aufweist. In Zusammenwirkung mit der Aufhängung im vorderen Bereich des Ausgleichspaddels wird durch die umlaufende Exzenterwelle und damit durch die Hin- und Herbewegung des Ausgleichspaddels eine stets gleichmäßige Beaufschlagung und Weiterförderung der Wertstoffe erzielt.

Gemäß der Ausgestaltung der Erfindung nach Unteranspruch 4 ist es zweckmäßig, daß die Bunkerband-Förderanlage mit zwei nebeneinander angeordneten Ausgleichspaddeln versehen sind, deren Hin- und Herbewegung bezüglich der Exzenterwelle um 180° versetzt ausgeführt sind. Die Aufteilung der Vorrichtung in mehrere Einzelvorrichtungen dient einer übersichtlichen und realistischen Baugröße bei größeren bzw. breiteren Abmaßen der Fördereinrichtung.

Gemäß der vorteilhaften Weiterbildung der Erfindung nach Unteranspruch 6 ist ein gemeinsamer oder kombinierter Antrieb zwischen der Bunkerband-Förderanlage und dem Antrieb der Exzenterwelle vorzugsweise über ein Kettenrad vorgesehen.

Die nach Unteranspruch 6 vorgesehenen schwenkbaren vorzugsweise im vorderen Bereich vorgesehenen Dorne des Ausgleichspaddels dienen der zusätzlichen Unterstützung des gleichmäßigen Transports der Materialien. Die über das Ausgleichspaddel hinausragenden Dorne greifen sicher in das Materialiengemisch ein.

Die Maßnahme nach Unteranspruch 7 ermöglicht eine auf das Transportgut unbeeinflußte Rückführung des Ausgleichspaddels in die hintere Lage.

Ein vorteilhaftes und zweckmäßiges Ausführungsbeispiel der Erfindung ist in der Zeichnung dargestellt und in der nachfolgenden Beschreibung näher erläutert. Es zeigen

Fig. 1 eine Seitenansicht der erfindungsgemäßen Vorrichtung im Zusammenspiel mit der Anlage,

Fig. 2 eine Draufsicht und

Fig. 3 eine Vorderansicht der erfindungsgemäßen Vorrichtung.

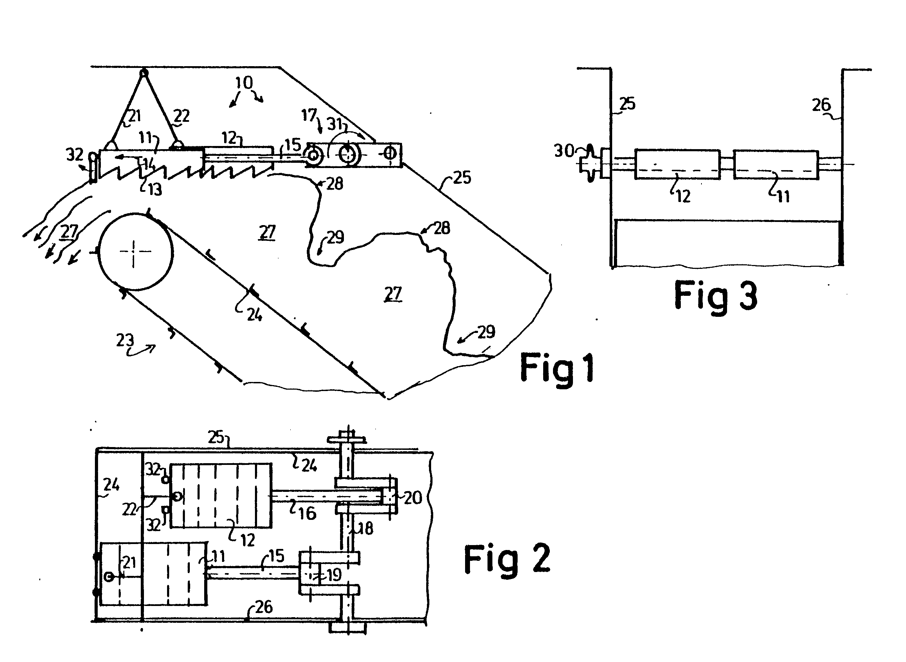

Die in den Figuren 1 und 2 dargestellte erfindungsgemäße Vorrichtung 10 besteht aus einem quaderförmigen bzw. rechteckigen Grundkörper 11, 12 an dessen Unterseite zick-zackförmige Zähne 13 angeordnet sind, die eine in der Figur nach links gerichtete Schubbewegung (Pfeil 14) ermöglichen. Am Körper 11, 12 sind Schubstangen 15, 16 starr befestigt, die ihrerseits mit einem Schubkurbeltrieb 17 mit Exzenterwelle 18 verbunden sind. Der Schubkurbeltrieb ist derart ausgelegt, daß die Hin- und Herbewegungen der Ausgleichspaddel (11, 12) gegenläufig erfolgt, d. h. die Drehbewegungen an der Exzenterwelle sind um 180° versetzt (Anlenkpunkte 19, 20 in Fig. 2).

Im vorderen Bereich der Ausgleichspaddel 11, 12 sind diese mittels jeweils eines Drahtseils 21, 22 aufgehängt, so daß ihre äußerste Höhenlage begrenzt ist.

Die erfindungsgemäße Vorrichtung ist in einer Bunkerband-Fördereinrichtung 23, bestehend aus einem Bunkerband-Förderband 24 und Seitenwänden 25, 26 integriert. Das Materialiengemisch bzw. der Trockenmüll ist mit 27 bezeichnet wobei die unterschiedlich anfallenden Mengen durch die Pfeile 28, 29 angedeutet sind.

Die in der Fig. 3 dargestellte Frontansicht zeigt das nach außen führende Kettenrad 30 zum Antrieb der Exzenterwelle 18, der mit dem Antrieb des Förderbands 24 kombiniert werden kann. Die Drehrichtung der Exzenterwelle 18 ist in Fig. 1 mit Pfeil 31 gekennzeichnet, d. h. im Uhrzeigersinn. Hierdurch erfolgt ein sanfter Eingriff des Ausgleichspaddels, d. h. eine dosierte Abgabe zu der nicht näher dargestellten Vorrichtung, die der Bunkerband-Fördereinrichtung 23 nachgeschaltet ist. Selbstverständlich kann die Drehrichtung der Exzenterwelle auch umgekehrt werden, wodurch jedoch ein anderes Eingriffsverhalten der Ausgleichspaddel in das Materialiengemisch verbunden ist.

Die im vorderen Bereich der Ausgleichspaddel 11, 12 vorgesehenen spikeförmigen Dorne 32 sind nach vorne hin schwenkbar ausgeführt. Sie können zusätzlich oder wahlweise auch seitlich angeordnet sein.

Es kann zweckmäßig sein, das Ausgleichspaddel 11, 12 bei der Rückwärtsbewegung ganz vom Transportgut anzuheben, um ggf. sperrige Güter wie Tonnen o. dgl. passieren zu lassen. Dies kann vorzugsweise dadurch geschehen, daß das Aufhängeseil 21, 22 über eine Zugvorrichtung in der Höhe veränderbar ausgeführt ist.

Die Erfindung, die nicht auf das dargestellte und beschriebene Ausführungsbeispiel beschränkt ist, wird durch die nachstehenden Patentansprüche definiert.

## Patentansprüche

1. Vorrichtung zur kontinuierlichen Weiterförderung von Materialien, insbesondere von zum Recycling bestimmten Stoffen, zu einer nachfolgenden Sortiervorrichtung, bestehend aus einer Bunkerband-Fördereinrichtung (23) und einer bewegbaren Ausgleichsvorrichtung (11, 12), dadurch gekennzeichnet, daß die Ausgleichsvorrichtung (11, 12) im Abgabebereich der Bunkerband-Fördereinrichtung (23) angeordnet ist und daß die sich hin und her bewegbare Ausgleichsvorrichtung (11, 12) die als Ausgleichspaddel oder Schieber ausgebildet ist, an einem umlaufenden Schubkurbeltrieb (17) mit Exzenterwelle (18) angelenkt ist und in der Vorwärtsbewegung (14) in Eingriff mit dem zu fördernden Material kommt, wobei in Bezug auf den Abgabebereich der Bunkerband-Fördereinrichtung (23) ein definierter Förderspalt und damit die Fördermenge festgelegt ist.

2. Vorrichtung nach Anspruch 1, dadurch gekennzeichnet, daß der vordere Bereich des Ausgleichspaddels (11, 12) mittels einer flexiblen Aufhängung (21, 22) geführt ist.

3. Vorrichtung nach Anspruch 1 oder 2, dadurch gekennzeichnet, daß das Ausgleichspaddel (11, 12) aus einem quaderförmigen bzw. rechteckigen Körper besteht, mit einer an der unteren Seite vorgesehenen Zacken- oder Zick-Zackförmigen Ausbildung der Eingriffsfläche (13) und daß die Verbindung zur Exzenterwelle über eine Schubstange (15, 16) erfolgt.

4. Vorrichtung nach einem der Ansprüche 1, 2 oder 3, dadurch gekennzeichnet, daß zwei parallel zueinander angeordnete Ausgleichspaddel (11, 12) an der Exzenterwelle (18) um 180° versetzt angeordnet sind.

5. Vorrichtung nach einem oder mehreren der vorhergehenden Ansprüche, dadurch gekennzeichnet, daß der Antrieb der Exzenterwelle (18) über einen Kettenantrieb (30) mit dem Antrieb der Bunkerband-Fördereinrichtung (23) kombinierbar ist.

6. Vorrichtung nach einem oder mehreren der vorhergehenden Ansprüche, dadurch gekennzeichnet, daß am Ausgleichspaddel (11, 12) nach unten hin gerichtete und nach vorne hin schwenkbare spikeförmige Dorne (32) vorgesehen sind.

7. Vorrichtung nach einem oder mehreren der vorhergehenden Ansprüche, dadurch gekennzeichnet, daß das Ausgleichspaddel (11, 12) beim Rückhub derart angehoben wird, daß die Höhe des im Abgabebereich der Bunkerband-Fördereinrichtung (23) durch die Ausgleichsvorrichtung (11, 12) festgelegten Förderspaltes veränderbar ist.

## Claims

1. Apparatus for the continuous further conveying of materials, especially of substances intended for recycling, to a succeeding sorting apparatus, consisting of a bunker belt conveyor (23) and of a movable compensating apparatus (11, 12), characterized in that the compensating apparatus (11, 12) is disposed in the discharge zone of the bunker belt conveyor (23) and that the reciprocatingly movable compensating apparatus (11, 12), which is constructed as compensating paddle or slider, is articulated to a revolving pusher crank drive (17) having an eccentric shaft (18) and comes into engagement, in its forward movement (14), with the material to be conveyed, a defined conveying gap being established with respect to the discharge zone of the bunker belt conveyor (23) and the quantity conveyed being thereby established.

2. Apparatus according to Claim 1, characterized in that the forward region of the compensating paddle (11, 12) is guided by means of a flexible suspension (21, 22).

3. Apparatus according to Claim 1 or 2, characterized in that the compensating paddle (11, 12) consists of a square or rectangular object, having a toothed or zigzag construction of the engagement surface (13) on its lower face, and that the connection with the eccentric shaft is provided by a thrust rod (15, 16).

4. Apparatus according to one of Claims 1, 2 or 3, characterized in that two compensating paddles (11, 12), disposed parallel to each other, are connected to the eccentric shaft (18) at a 180° interval.

5. Apparatus according to one or more of the preceding Claims, characterized in that the drive of the eccentric shaft (18) can be combined by a chain drive (30) with the drive of the bunker belt conveyor (23).

6. Apparatus according to one or more of the preceding Claims, characterized in that downwardly orientated and forwardly pivotal spike-shaped pins (32) are provided on the compensating paddle (11, 12).

7. Apparatus according to one or more of the preceding Claims, characterized in that the compensating paddle (11, 12) is lifted during the return stroke in such a manner that the height of the conveying gap established in the discharge zone of the bunker belt conveyor (23) by the compensating apparatus (11, 12) is variable.

## Revendications

1. Dispositif pour emmener de façon continue des matériaux, notamment des matières destinées au recyclage, à une installation de triage montée plus loin, dispositif constitué par un transporteur (23) à bande avec trémie et un dispositif de compensation (11, 12) mobile, caractérisé en ce que le dispositif de compensation (11, 12) est monté dans la zone de déchargement du transporteur (23) à bande avec trémie, et en ce que ce dispositif de compensation (11, 12) se déplaçant en un mouvement de va-et-vient, et qui est constitué sous forme de palette de compensation ou de coulisseau, est articulé sur un mécanisme bielle-manivelle (17) rotatif pourvu d'un arbre d'excentrique (18) et vient, dans son déplacement vers l'avant (14), en prise avec le matériau à transporter, un intervalle de transport défini et, par suite, le débit de transport, étant déterminé par rapport à la zone de déchargement du transporteur (23) à bande avec trémie.

2. Dispositif selon la revendication 1, caractérisé en ce que la zone antérieure de la palette de compensation (11, 12) est guidée au moyen d'une suspension flexible (21, 22).

3. Dispositif selon la revendication 1 ou 2, caractérisé en ce que la palette de compensation (11, 12) est constituée par un corps en forme de parallélépipède ou rectangulaire, présentant, prévue sur la face inférieure, une constitution de la surface de prise (13) en forme de dents ou de zigzag, et en ce que la liaison à l'arbre d'excentrique s'effectue par l'intermédiaire d'une bielle (15, 16).

4. Dispositif selon l'une des revendications 1, 2 ou 3, caractérisé en ce que deux palettes de compensation (11, 12), disposées parallèlement l'une à l'autre, sont montées sur l'arbre d'excentrique (18) en étant décalées de 180°.

5. Dispositif selon l'une ou plusieurs des revendications précédentes, caractérisé en ce que l'entraînement de l'arbre d'excentrique (18) peut se combiner par l'intermédiaire d'une transmission par chaîne (30), avec l'entraînement du transporteur (23) à bande avec trémie.

6. Dispositif selon l'une ou plusieurs des revendications précédentes, caractérisé en ce que sur la palette de compensation (11, 12) sont prévues des broches (32) en forme de crampons, dirigées vers le bas et pouvant pivoter vers l'avant.

7. Dispositif selon l'une ou plusieurs des revendications précédentes, caractérisé en ce que la palette de compensation (11, 12), lors de la course de retour, est soulevée de telle manière que le niveau de l'intervalle de transport déterminé par le dispositif de compensation (11, 12) dans la zone de déchargement du transporteur (23) à bande avec trémie, est modifiable.

Fig 1

Fig 3

Fig 2

0 181 899